# EUROPEAN PATENT APPLICATION

(11) **EP 0 707 362 A1**
(43) Date of publication of application: **17.04.1996**
(21) Application number: 95850145.4
(22) Date of filing: 25.08.1995
(51) Int. Cl.: H01S 3/092, H01S 3/131

(54) **Device for controlling of flashlight**

(30) Priority: 15.09.1994 SV 9403081
(71) Applicant: TELEFONAKTIEBOLAGET LM ERICSSON, S-126 25 Stockholm (SE)
(72) Inventor: Bane, Sven Erik Peter, S-430 50 Kallered (SE)
(74) Representative: Hammond, Andrew David

(57) **Abstract**

Device for controlling the flashlight energy emitted by the flash lamp in a pulse type laser device, in which the laser material is excited by flashlight pulses from a flash lamp (1). The arrangement comprises means (C, L, R, 3, 2) for energy supply and control of the flash lamp. The flashlight emitted by the flash lamp is measured by means of a photo-sensitive element (5) the output signal of which is integrated in an integrator (7, 8, 9). In this manner a signal which constitutes a measure of the energy emitted by the flash lamp is obtained. This signal is compared with a set value in a comparator (10). The comparator generates an output signal when the signal obtained from the integrator reaches the set value. This output signal is supplied to the means for energy supply and control of the flash lamp in order to interrupt the flash light pulse.

## Description

### TECHNICAL FIELD:

The present invention relates to a device for controlling the energy emitted from a flashlight which is used for excitation of the laser material in a laser rod.

### BACKGROUND OF THE INVENTION:

The atoms of certain materials can be excited in various ways up to levels of energy which are higher than normal. When the atoms regain their normal energy levels, they emit (monochrome) light. This property is used in different types of lasers. In pulse lasers, i.e. lasers intended for emitting short pulses of laser light, the laser material is often excited by intensive pulses of light from a flash lamp.

In order to ensure that the laser material is excited during all circumstances, the energy which is supplied to the flashlight device must exceed the energy which is required in order to obtain lasing.

For storing the energy of the flashlight a capacitor is often used, which capacitor is charged to a certain voltage by means of a power supply device. Since capacitors intended for the relatively high voltages in question are large, this over-dimensioning also involves an increased demand for space. The capacitance of the capacitor can also be temperature-dependent, which means that the stored energy and consequently the energy of the flashlight pulse is affected by the temperature.

In order to reduce the energy consumption and to prevent the generation of a plurality of unwanted laser pulses, devices have been introduced in different applications which indicate the laser pulse and switch off the flashlight when lasing has been obtained. In this manner, the energy which remains in the supply circuits of the flash lamp can be taken care of and can be used in the subsequent discharging.

The laser material can be constituted by glass which has been doped with different materials. As doping material, elements from the group containing lantanides, the so-called rare earth metals, are often used. Among these, erbium (Er) can be mentioned, this having the property that the generated laser light has a wavelength which results in the risk of damage to the human eye being reduced. Thus, erbium lasers belong to the so called "eye-safe" lasers.

In order to excite (pump) a laser rod of Er glass, a flash lamp with xenon gas can be used. The length of the flashlight pulse can be of a magnitude of 1-2 ms. A problem which was discovered during experiments with Er glass is that the input energy during pumping of the laser rod must be of high accuracy. In fact, the use of correct input energy affects the properties of the laser pulse to a great extent, such as the output energy, the pulse shape, the pulse width etc. Moreover, amongst other things the input energy varies depending on the ageing of the flashlight, pollution on the lamp and the reflector, the pulse repetition frequency (the measuring frequency), the surrounding temperature etc.

Since the properties of the laser pulse in an erbium laser depend more on the input energy than in many other types of pulsed lasers, the traditional control of the length of the flashlight pulse by means of an indication of the laser light pulse does not provide sufficient accuracy.

### SUMMARY OF THE INVENTION:

An object of the present invention is thus to improve the control of the flashlight energy in a laser device so as to obtain a satisfactory control of the generated laser light pulse independently of changes of the flashlight and the capacitor and the working conditions thereof, such as for example temperature and pulse repetition frequency.

Said object can be achieved by means of a device which measures the energy emitted by the flashlight and compares it with a "set value". In this regard, the set value can be fixed, but according to an advantageous embodiment of the invention it can be generated by storing a nominal value which corresponds to the "normal" amount of energy which is required in order to obtain a laser light pulse having the desired properties, and values which depend on the present temperature, pulse repetition frequency and any other varying parameters. The measured emitted energy is compared with the set value during the flashlight pulse and when the set value has been reached the flashlight pulse is switched off.

### BRIEF DESCRIPTION OF THE DRAWINGS:

- Fig. 1: shows a simplified circuit diagram of the energy supply for a flash lamp.
- Fig. 2: shows a simplified circuit diagram of a preferred embodiment of the invention.
- Fig. 3: shows a simplified circuit diagram of an element forming part of the invention for determining a set value.

### PREFERRED EMBODIMENT:

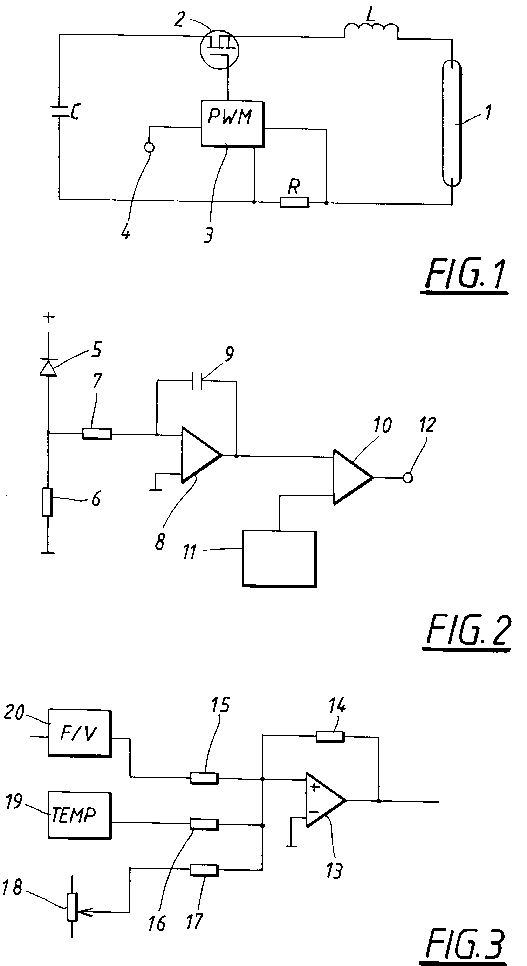

The invention will now described in the form of an embodiment and with reference to Figs. 1-3.

Fig. 1 shows a simplified circuit diagram of a supply device for a flashlight lamp 1 intended for pumping a laser rod. The device, which can be said to be a modified "buck converter", comprises a capacitor C, one connector of which is connected to the flash lamp 1 via a switching element 2 and an inductor L. The return conductor of the flash lamp is connected to the second connector of the capacitor C via a resistor R. A control device 3 which controls the switching element 2 is connected across the resistor R. Furthermore, the control device 3 comprises a control input 4.

Voltage converters of the buck type are well-known to the person skilled in the art. Consequently, the operation of the converter will only be described briefly: the capacitor C is charged, by means of a DC voltage device (not shown), to a voltage which is higher than that which is needed for driving a current through the flash lamp 1. The voltage should be of such a nature that when the desired energy for the flashlight pulse has been supplied, the voltage across the capacitor C is still capable of driving the current through the lamp.

The current through the flash lamp is measured by means of the potential difference that it produces across the resistor R. The control unit 3, which can be a pulsewidth modulator, senses the potential difference across the resistor R and emits, depending on the potential difference and thus also the current through the flash lamp, pulses to the switching element 2 which accordingly switches between its conducting and non-conducting state. The advantage with this is that a proper control of the current density of the lamp is obtained, which affects the light spectrum. A suitable current density is set in the control unit as a reference value for the closed loop formed by the switching element 2, the flash lamp 1, the resistor R and the control unit 3.

In laser devices of conventional type, the output pulse from the laser device is measured by means of a detector which can sense the wavelength of the laser light, as has been mentioned above. In this regard, a signal is supplied from the detector device, which signal indicates that the laser material has been excited sufficiently in order to achieve lasing. This signal is fed back to the control input 4 of the control unit 3 and results in that the control unit sets the switching element 2 in the non-conducting state when lasing is indicated. This means that the current through the flash lamp is disconnected and consequently that the flashlight pulse is switched off.

The supply of the flash lamp can of course be arranged in other ways than that which has been described above. Accordingly, pulse shaping networks, similar to the ones which are used for pulsing of magnetron transmitters, can be used. However, the method and the devices for storing energy and for transmitting energy to the flash lamp are not crucial for the invention, but have been described in order to facilitate the understanding of the invention.

As mentioned initially, the input energy to the laser material in an Er laser is of great importance for the properties of the laser pulse. The above-described devices have in common that no feedback from the lamp light occurs. One way of obtaining a better control of the actual energy emitted from the flash lamp is to measure the light by means of a photo-sensitive detector component, e.g. a photo-diode having a satisfactory linearity. By integrating the signal from this component, a measure of the energy from the flash lamp is obtained. If an optical filter having a suitable passband is arranged before the photo-diode, the energy of the pumping wavelength of the laser material can be measured. A circuit diagram for such a device is shown in Fig. 2.

In Fig. 2, numeral 5 denotes the photo-sensitive diode. The signal from this diode is supplied via the resistor 6 to a resistor 7 which forms part of a known integrator device which, except for the resistor 7, comprises an amplifier 8 provided with feedback by means of the capacitor 9. Since the output signal from the photo-sensitive diode depends on the intensity of the flashpulse light, the output signal of the integrator device will constitute a measure of the energy in the flashlight pulse. The output signal from the integrator device is compared in a comparator 10 with a "set value" delivered by the device 11. When the output signal has reached the same value as the set value, this is indicated on the output signal from the comparator which is connected to the connection point 12. The output signal of the comparator is connected to the control input 4 of the control unit 3, by means of which the flashlight pulse is switched off when the energy emitted from the flashlight pulse has reached the set value, in the above-described manner.

By means of this device, the effect of ageing of the flash lamp and pollution on reflectors and other optical components can be reduced. This quality of the device is in principle obtained independently of the set value. This value can thus be fixed. However, other advantages can be obtained by making the set value dependent on other variable parameters.

The device 11 can for example be designed in accordance with Fig. 3. The figure shows an adding amplifier which comprises an amplifier 13, a feedback resistor 14 and three adding resistors 15-17. Voltages representing different parameters which may affect the set value are connected to the adding resistors. Consequently, the sum of these voltages generates a voltage at the output of the amplifier, which voltage is the set value which is supplied to the comparator 10. A voltage representing the nominal set value is thus connected to the resistor 17. The nominal set value may for example correspond to the input energy which is required for the correct excitation of the laser material at room temperature and a normal measuring rate. The voltage which corresponds to the nominal set value can for example be set by means of a potentiometer 18.

In order to take into account variations in temperature, the resistor 16 can be supplied with a voltage which varies according to the temperature. This voltage is generated in a temperature unit 19 which comprises a temperature-sensitive element and also adaptor circuits which impart a characteristic on the generated voltage corresponding to the temperature dependence of the laser material, with respect to the input energy.

The repetition frequency (the measuring frequency) of the laser pulses also affects the input energy dependence of the laser pulse. The pulse repetition frequency is converted in the unit 20 to a voltage having such characteristics that the set value, and thus also the input energy to the laser material, is changed so that any unwanted changes in the properties of the laser material relating to changes in the measuring rate are compensated.

The above-mentioned signals can be provided with the desired characteristics in a number of different ways which are known to the skilled person. For example, in devices comprising processors, the characteristics can be stored as tables in the form of empirical relationships between a certain parameter (e.g. temperature) and a corresponding alteration of the set value.

From the above-mentioned embodiments it is thus apparent that it is possible to eliminate the effect of ageing of the flash lamp and/or the changes in the properties of the optical components and also to prevent the properties of the laser pulse being affected in an undesired way by external factors such as temperature, measuring rate etc., by measuring the energy of the flashlight pulse which excites an Er laser.

It should also be mentioned that even though the invention has been described for use in an Er laser, there is nothing which prevents the application thereof in other types of lasers where accurate control of the properties of the laser pulse is desired.

Consequently, the description above should be regarded as merely exemplifying different embodiments of the invention. However, the invention is not limited to these embodiments, but may be varied within the scope of the appended claims.

## Claims

1. Device for controlling the flashlight energy emitted of from the flash lamp of a laser device of the pulsed type, in which the laser material is excited by means of flashlight pulses from a flash lamp (1), and comprising devices (C, L, R, 3, 2) for energy supply and control of the flash lamp, **characterized in** that the flashlight emitted by the flash lamp is measured by means of a photo-sensitive element (5), the output signal of which is integrated in an integrator (7, 8, 9), by means of which a signal constituting a measure of the energy emitted by the flash lamp is obtained, which signal is compared with a set value in a comparator, the comparator providing an output signal when the signal supplied from the integrator reaches the set value, which signal is supplied to the devices for energy supply and control of the flash lamp in order to interrupt the flashlight pulse.

2. Device according to claim 1, **characterized in** that said set value is a fixed value.

3. Device according to claim 1, **characterized in** that said set value varies depending on the operating conditions of the laser device.

4. Device according to claim 3, **characterized in** that said set value is the output signal from an adding amplifier (13-17), the inputs of which are supplied with signals corresponding to the set value at a certain operating condition and corresponding to the changes of the set value during a change of the operating conditions.

5. Device according to claim 4, **characterized in** that the changes in operating conditions which change the set value comprise the temperature of the laser device.

6. Device according to claim 4, **characterized in** that the changes in operating conditions which change the set value comprise the pulse repetition frequency for the laser pulses emitted from the laser device.

7. Device according to any one of the preceding claims, **characterized in** that during measurement of the flashlight emitted by the flash lamp (1), the flashlight is first filtered by means of an optical filter having a pass band which implies that the energy in the pumping wavelength of the laser material is measured.
